(19) 

Europäisches
Patentamt
European
Patent Office
Office européen
des brevets

(11)  **EP 2 666 565 A1**

(12)  **EUROPEAN PATENT APPLICATION**
published in accordance with Art. 153(4) EPC

(43) Date of publication:
**27.11.2013 Bulletin 2013/48**

(51) Int Cl.:
***B22F 1/02*** *(2006.01)*

(21) Application number: **12736277.0**

(22) Date of filing: **18.01.2012**

(86) International application number:
**PCT/JP2012/050956**

(87) International publication number:
**WO 2012/099161 (26.07.2012 Gazette 2012/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2011 PCT/JP2011/050750**

(71) Applicant: **DOWA Electronics Materials Co., Ltd.
Chiyoda-ku
Tokyo 101-0021 (JP)**

(72) Inventors:
• **UEYAMA, Toshihiko
Tokyo 101-0021 (JP)**
• **SASAKI, Shinya
Tokyo 101-0021 (JP)**

(74) Representative: **Haley, Stephen
Gill Jennings & Every LLP
The Broadgate Tower
20 Primrose Street
London EC2A 2ES (GB)**

(54) **METAL PARTICLE POWDER AND PASTE COMPOSITION USING SAME**

(57) It is important that the metal particles used in a conductive paste used for wiring have the characteristic of being easily dispersed in a polar solvent in combination with another material such as a resin used in a paste. Provided is a metal particle powder which exhibits a pH value of 6 or less when 0.5 g of the metal particles to be evaluated are added to 100 mL of a potassium hydroxide solution with a pH of 11, and then an aqueous nitric acid solution in an amount in which pH becomes 5 by adding 0.10 mol/L nitric acid to 100 mL of a potassium hydroxide solution and 10 mL of ethyl alcohol (blank solution) with a pH of 11 is added.

EP 2 666 565 A1

**Description**

Field

The present invention relates to metal fine particles (in particular, silver nanoparticles) suitably used for a fine wiring and a joined body and a paste containing the particles.

Background

Metal nanoparticles are widely known to exhibit different properties, particularly due to an increased specific surface area with the decreased particle diameter, and are used for wider ranges of applications. In particular, when fine particles are used, the metal nanoparticles are characterized by a high reactivity and a high meltability. For this reason, use for applications such as a conductive adhesive, conjugation between substances, and formation of conductive wiring is investigated.

Recently, electronic devices are further reduced in size, and a finer wiring is targeted. In particular, in order to achieve the finer wiring, a wiring to be drawn needs to be formed very finely while the conductivity is secured.

The present inventors have developed particles which are stable in air even with a nano-scale primary particle diameter and are suitable for mass production. The particles have been disclosed in Patent Literatures 1 and 2.

When metal particles are dispersed in a solvent to form a paste or an ink, the surface properties of the metal particles largely affect the properties of the ink. In particular, metal nanoparticles having a small average primary particle diameter have a large specific surface area, and therefore the effect thereof is remarkable. Accordingly, it is very important as a technique that the surface properties are controlled to ensure the stability of the paste and the dispersibility of the particles.

The present applicant has found the relationship between the number of protons existing on the surface of metallic copper powder and a surface functional group existing on the surface, and disclosed the results in Patent Literature 3. In Patent Literature 3, an acidic aqueous solution is titrated by an alkaline reagent, and the number of protons drawn by the surface functional group on the surface of the copper powder at each pH is calculated. The calculated number of protons is assumed to represent a surface state when the surface of copper powder is treated with a fatty acid. From the calculated number of protons, whether or not the copper powder is suitable for a surface treatment with a fatty acid is determined. Specifically, Patent Literature 3 discloses a method for providing copper powder suitable for the surface treatment with a fatty acid.

In addition, a powder pH (for example, JISK5101-17-2) has been conventionally known as a method for evaluating the surface properties of particles. In many cases, the surface properties of particles are investigated in association with the index thereof, and preferable ink and paste are provided (for example, Patent Literatures 4 to 6).

Citation List

Patent Literature

Patent Literature 1: Japanese Patent No. 4344001
Patent Literature 2: Pamphlet of International Publication No. 2010/073705
Patent Literature 3: Japanese Patent Application Laid-Open No. 2009-084614
Patent Literature 4: Japanese Patent Application Laid-Open No. 2007-204817
Patent Literature 5: Japanese Patent Application Laid-Open No. 2005-179096
Patent Literature 6: Japanese Patent Application Laid-Open No. 2004-327669

Summary

Technical Problem

In addition to the above-described metal particles and method for producing the same, there have been many proposals regarding these. Further, the metal particles provided in the proposals have various sizes ranging from nanometers to micrometers. However, only metal particles having a size merely specified are not practically used for a conductive wiring.

When the particle diameter is small, high-precision printing is possible, and therefore a fine wiring may be achieved. However, the metal particles have less practical application unless a paint (ink) capable of printing by an actual printing method can be prepared.

Specifically, there is a problem whether or not an ink having characteristics such as viscosity, drying properties, adhesion, shelf life, and sintering temperature, which are required for an ink usable in a printing method capable of fine printing such as screen printing and inkjet printing can be prepared.

The characteristics of such an ink cannot be achieved only by metal particles. The metal particles need to be easily mixed with other materials constituting the ink. In this case, it is important whether or not the metal particles have characteristics capable of being dispersed in a polar solvent such as terpineol and octanediol. This is because there have been various existing materials as a material used by dispersion in a polar solvent and the materials have many actual performances. Further, in terms of metal particles easily made into a paint, it is important for practical use that the metal particles have characteristics wherein the particles are easily dispersed in a polar solvent.

A conventionally known procedure of evaluating the surface properties of particles from the powder pH is, as obvious from the measurement technique, one in which a pH value derived by boiling "water not pH-adjusted" in a state where powder is added thereto or allowing the "water not pH-adjusted" in the state where powder is added thereto to elute metal at normal temperature is evaluated. However, a coated layer of an organic material is often formed on the surface of metal nanoparticles, providing buoyancy in water or not wetting the powder sufficiently. This shows that an error is large and an appropriate evaluation result is difficult to be obtained. Therefore, presentation of a method capable of accurately evaluating the surface state of metal nanoparticles is essential for enlarged industrial applicability of nanoparticles.

The phrase "the particles are easily dispersed in a polar solvent" used herein means that the metal particles are not separated from the polar solvent (dispersion medium) and are not aggregated followed by precipitation. In the case of formation of an ink, when the separation from the dispersion medium and aggregation followed by precipitation occur, it cannot be said that metal particles may not be uniformly present in the ink. In this case, a uniform wiring cannot be printed.

The characteristics whether or not the metal particles are easily dispersed in a polar solvent are considered to relate to the surface state of metal particles (for example, amount of hydroxyl group to be bonded). However, there have been less reports to provide a quantitative index as to such a surface state and dispersibility of metal particles heretofore. There has been no report about metal nanoparticles. No method has been suggested to establish an indication for evaluating surface properties of metal particles so as to have the metal particles to be easily dispersed in a polar solvent, or no metal particles satisfying such an indication has been provided, which forms a problem to be solved by the present invention.

Solution to Problem

The inventors have made researches and found that the problem can be solved with a powder satisfying following conditions, and completed the present invention:

The 0.5 g of powder of metal particles to be evaluated (hereinafter also referred to as "sample powder") is added to a mixed solution of 100 mL of potassium hydroxide solution (blank solution) with a pH of 11 and 10 mL of ethyl alcohol. When aqueous nitric acid solution with 0.10 mol/L is added to the mixed solution with 0.5 g of the sample powder by a quantity specified below, the mixed solution entirely exhibits a pH of 6 or less, wherein the quantity of the aqueous nitric acid solution with 0.10 mol/L to be added is the same as that of the aqueous nitric acid solution with 0.10 mol/L allowing the mixed solution of 100 mL of the potassium hydroxide solution with a pH of 11 and 10 mL of ethyl alcohol with no sample powder being added thereto to exhibit a pH of 5 when the aqueous nitric acid solution with 0.10 mol/L is added. Namely, a metal particle powder based on the index described above is easily dispersed in a polar solvent. "With a pH of 11" in the present description means that a mixed solution of potassium hydroxide and ethyl alcohol is "adjusted to a range of pH of 11 ± 0.5." Measurement is performed by addition of a powder to be measured to a reference (blank solution). Therefore, results of analysis are not affected even when an initial pH varies in this range.

More specifically, the metal particle powder of the present invention satisfies the following conditions:

Aqueous nitric acid solution with 0.10 mol/L is prepared in such a quantity that allows a mixed solution of 100 mL of potassium hydroxide solution with a pH of 11 and 10 mL of ethyl alcohol (blank solution) to exhibit a pH of 5 when adding the aqueous nitric acid solution to the mixed solution. When the prepared quantity of the aqueous nitric acid solution is added to 100 mL of potassium hydroxide solution with a pH of 11 after adding the sample powder to 100 mL of potassium hydroxide solution with a pH of 11 by 0.5 g, the mixed solution entirely exhibits a pH of 6 or less.

Also, the metal particle powder of the present invention satisfies the following conditions:

Aqueous nitric acid solution with 0.10 mol/L is prepared in such a quantity that allows 100 mL of potassium hydroxide solution (blank solution) with a pH of 11 to exhibit a pH ranging from 4.5 to 5.5 when adding the aqueous nitric acid solution to the blank solution. When the prepared quantity of the aqueous nitric acid solution is added to 100 mL of potassium hydroxide solution with a pH of 11 after adding the sample powder to 100 mL of potassium hydroxide solution with a pH of 11 by 0.5 g, the number of protons (H+) released from the metal particles to be evaluated is calculated as $3.0 \times 10^{19}$ (number /m$^2$) or less.

In addition, the metal particle powder is a metal particle powder in which the metal particle as described above has a surface composed of an organic material having 8 or less carbon atoms in total.

Moreover, the metal particle powder is a metal particle powder in which the average primary particle diameter of the metal particles is 10 to 1000 nm.

The above-described metal particle powder is combined with a metal powder, an organic solvent, a resin, and the like, to obtain a metal paste containing the metal particles suitable for various applications.

Advantageous Effects of Invention

By constituting the composition of the powder as described above, a metal particle powder having excellent particle dispersibility in alcohols, ketones, and esters can be obtained.

Brief Description of Drawings

FIG. 1 is a schematic diagram illustrating the configuration of a measurement device for obtaining an index of the present invention.

FIG. 2 is a graph showing results of measurement by the measurement device of FIG. 1.

FIG. 3 is a graph showing a correlation between a pH value (reference pH value) of a blank solution when 0.10 mol/L nitric acid is added to 100 mL of a potassium hydroxide solution with a pH of 11 (the blank solution) and a pH value (indicated pH value) when 0.1 mol/L nitric acid is added to 100 mL of a potassium hydroxide solution with a pH of 11 to which 0.5 g of powder has been added.

FIG. 4 is a graph showing a correlation between a pH value (reference pH value) of a blank solution when 0.10 mol/L nitric acid is added to 100 mL of a potassium hydroxide solution with a pH of 11 (the blank solution) and the amount (number/m$^2$) of protons released from or adsorbed by particles calculated by an expression (1).

Description of Embodiments

In the present invention, metal particles are evaluated by the following method for evaluating the surface properties in terms of low or high dispersibility in a polar solvent. Further, the metal particles are sometimes simply referred to as "particles." Since the metal particles are generally handled in a powder state, the metal particles are sometimes referred to as "metal particle powder" or simply "powder." Moreover, "powder of metal particles to be evaluated" is referred to as "sample powder."

(Method for evaluating surface properties of metal particles)

0.5 g of the sample powder having been pulverized through a 500 mesh is added to a mixed solution with a pH of 11 of 100 mL of a potassium hydroxide solution containing 0.01 mol/L potassium nitrate (herein potassium nitrate is added as a buffering agent of suppressing a sudden increase in conductivity in a liquid with increased ion concentration during titration) and 10 mL of ethyl alcohol. To this solution, 0.10 mol/L aqueous nitric acid solution is added at a rate of 0.02 mL/min, and a change in the pH of the sample solution of the sample powder is measured. Since an aqueous potassium hydroxide solution or an alternate solution thereof has an action of absorbing carbonic acid in air, it is not preferable that the solution prepared a few days ago or more be used.

The present inventors have investigated, and found that the surface properties may not be sufficiently obtained from the analysis of particles of metal on the acidic side as disclosed in Patent Literature 3. Specifically, when titration on the acidic side is performed, the particles are dissolved according to the material of the particles, metal ions (copper ions in Patent Literature 3) produced by the dissolution may interrupt the titration. Since micron-scale particles as disclosed in Patent Literature 3 are unlikely to be dissolved relatively, an appropriate value is indicated. However, nano- or submicron-scale metal particles tend to be dissolved. Therefore, this evaluation procedure is not appropriate for such particles. Consequently, a procedure of titration on the alkaline side is adopted as the evaluation in the present invention.

The change in pH by addition of an aqueous nitric acid solution can be measured, for example, with a stream automatic potentiometric titrator (AT-510Win/PCD-500 stream automatic potentiometric titration unit manufactured by Kyoto Electronics Manufacturing Co., Ltd.). It is preferable that the measurement be performed with the dispersibility of the sample powder maintained. Therefore, it is preferable that the measurement be performed by measuring a pH while a solution is stirred with a magnetic stirrer.

Further, an aqueous nitric acid solution in the same concentration as described above is added to an aqueous potassium hydroxide solution in which a sample powder is not added, wherein the aqueous nitric acid solution and the aqueous potassium hydroxide solution are the same as described above. Thus, the change in pH during addition of an aqueous nitric acid solution to a blank solution is measured in advance. This change is used as a reference for defining the change in pH during addition of an aqueous nitric acid solution to a sample powder dispersion solution.

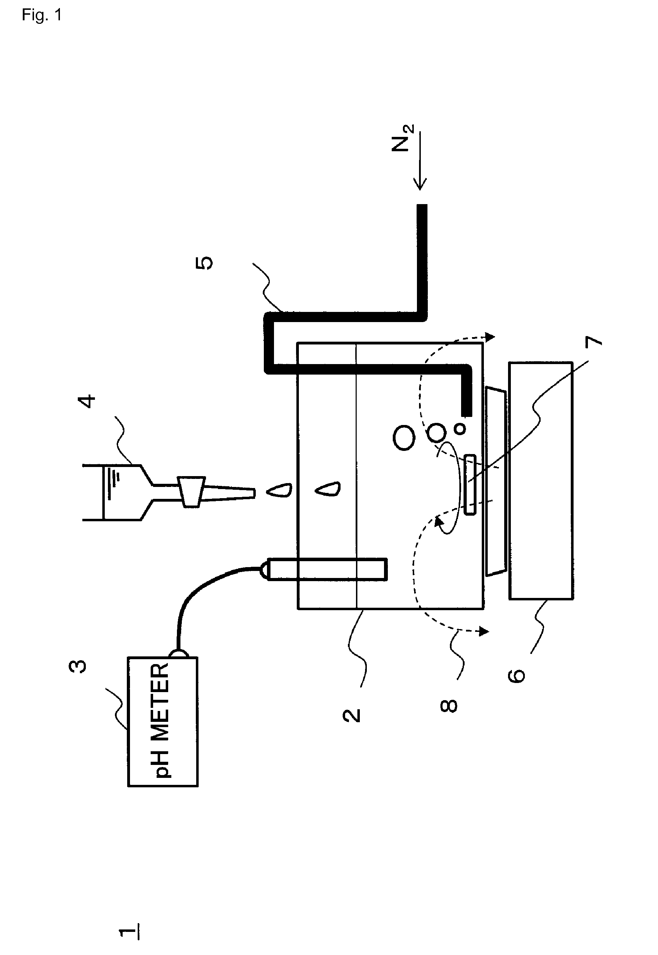

FIG. 1 is a view illustrating the configuration of a stream automatic potentiometric titrator 1. The stream automatic potentiometric titrator 1 includes a tank 2 which holds a potassium hydroxide solution, an electrometer (pH meter) 3 which measures a pH, and a titrator 4 of an aqueous nitric acid solution. In the tank 2, a nitrogen gas introducing pipe 5 may be disposed so that the pH is not changed by absorption of carbon in air. A solution in the tank 2 is stirred with a magnetic stirrer 6 and a stir bar 7. The magnetic stirrer 6 generates an alternating-current magnetic field 8, to cause the rotary movement of the magnetic stir bar 7. A controller not shown controls the titrator 4 and the electrometer (pH meter) 3 of the present case and records the titer and pH value successively.

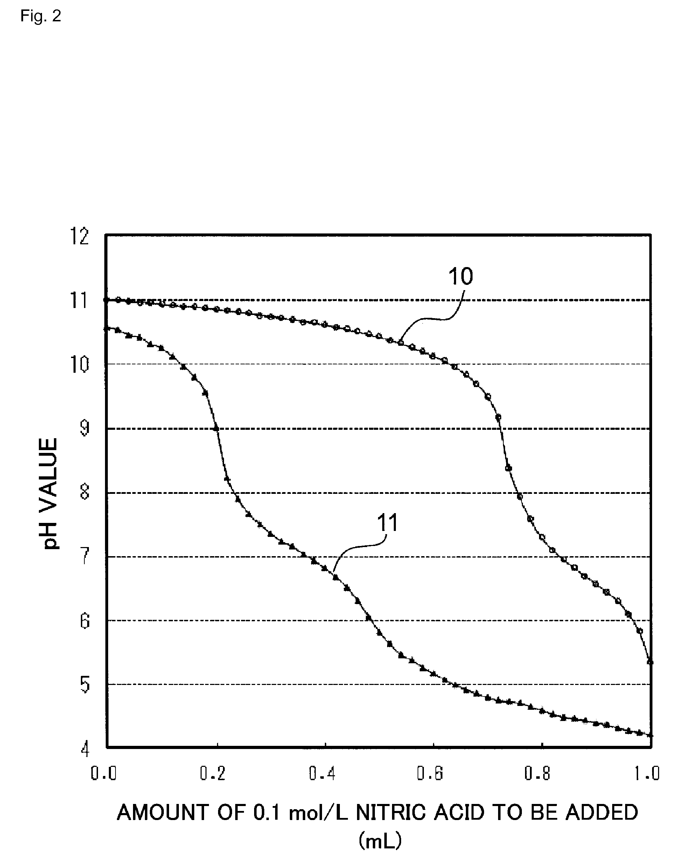

As described above, the changes in pH of the blank solution and the solution containing a sample powder are shown, for example, in FIG. 2. In FIG. 2, a line 10 with an open circle represents the change in pH of the blank solution, and a line 11 with a solid triangle represents the change in pH of the solution containing a sample powder. In FIG. 2, a horizontal axis represents a total amount (mL) of a nitric acid solution titrated, and a longitudinal axis represents a pH value determined by the pH meter 3. In judgment standard as described below, whether or not metal particles are easily dispersed in a polar solvent is judged from the relationship of the pH of the blank solution as "standard pH" and the pH of the solution containing a sample powder as "indicated pH."

From the pH value measured for the presence or absence of the sample powder, the amount of protons ($H^+$) released from or absorbed by the metal particles can be calculated. Specifically, the calculation is as follows. When metal particles as a sample powder release a proton, the value of proton amount is negative (-). When it absorbs a proton, the value of proton amount is positive (+). As obvious from the pH value, when a proton is released from metal particles, the pH is a value closer to the acidic side than the reference (i.e., small), and when a proton is absorbed, the pH is a value closer to the basic side than the reference (i.e., large).

The amount of protons ($H^+$) released or absorbed (accumulated) to the solution per unit area is calculated by the following expression (1). Further, $N_A$ is an Avogadro's number (= $6.02 \times 10^{23}$). However, the pH value used in this calculation is a pH value when nitric acid in the same concentration and the same amount is added.

[Expression 1]

$$H^+ = \frac{\{10^{(\text{-pH value in reference})} - 10^{(\text{-pH value when sample is added})}\} \times N_A(6.02 \times 10^{23})}{\left(\begin{array}{l}\text{Specific surface area (m}^2\text{/g)}\\\text{calculated by the BET method}\end{array}\right) \times \left(\begin{array}{l}\text{Quantity of sample used}\\\text{for measurement}\end{array}\right)}$$

The amount of released or absorbed protons which is calculated by the expression (1) shows the degree of gain or loss of protons according to the addition of a sample powder in an environment where the same amount of protons are added to the solution. Therefore, this value can be said to show a sensitivity of the powder to the protons.

However, this measurement is similar to the measurement of isoelectric point, but there is a little difference. The isoelectric point represents a pH at which the surface charge of a powder becomes zero. At the isoelectric point, the electrophoretic mobility becomes zero. On the other hand, an isoacidic point is a pH at which change in pH does not occur even when a powder is suspended in the solution. Therefore, the isoelectric point is to represent the total effect of all the ions contained in a powder (fundamentally, in the surface). The isoacidic point focuses on only gain or loss of the protons by a powder. For example, the isoelectric point of the surface of Teflon (registered trademark) can be measured, but the isoacidic point thereof cannot be measured. In order to know the relationship of dispersibility between particles and resin, the value near the isoacidic point is used as a marker, and the isoelectric point is meaningless.

Further, "metal particles (powder) having favorable dispersibility" in the present invention means metal particles in which the form of primary particles is maintained and the particles are unlikely to be aggregated when the particles are used in a paint. Specifically, the metal particles can be evaluated by fineness of grind gauge as described in "JISK-5600-2-5: 1999 Testing methods for paints, Part 2: Characteristics and stability of paints, Section 5: dispersity."

In the present description, a point in which a proportion of lines showing the presence of particles in a band showing a diameter of the particles when a scraper is pulled in evaluation of an aggregate to the whole grooves is half is evaluated as an average particle size $D_{50}$. In Table 1, this value is represented by "grind gauge." A paste can be obtained in the following manner as a paste subject to the evaluation. For example, 70 g of a sample powder, 8.9 g of butyl carbitol acetate, 22.3 g of a thermoplastic polyurethane resin (for example, UREARNO 8001 available from ARAKAWA CHEMICAL INDUSTRIES, LTD.), and 0.35 g of macromolecular pigment dispersant (for example, AJISPER PA-111 available from Ajinomoto Fine-Techno Co., Inc.) are mixed and kneaded with a triple roll to obtain the paste. The resulting paste can be evaluated. The prepared paste has a diameter of the aggregate ($D_{50}$ value) of 5.0 $\mu$m or less, and preferably 3.0 $\mu$m or less. The diameter of the aggregate can be confirmed in more detail by a gauge provided with a deepest groove of 50 $\mu$m or less.

1.0 g of a powder is placed in a 50 mL glass container, and then 20 mL of $\alpha$-terpineol is poured. The mixture is mixed with an ultrasonic disperser (for example, Ultrasonic Washer 1510J-MT manufactured by Yamato Scientific Co., Ltd.) for 5 minutes and allowed to stand for 12 hours. After then, as visible evaluation of dispersibility, the solution is observed from the horizontal direction, and the state thereof is evaluated. As specific judgment standards, a state where a visual field is shielded by particles is evaluated as "o", a state where transmitted light is confirmed (powder partially forms a void) is evaluated as "$\Delta$", and a state where particles are completely precipitated or float and do not prevent light transmission is evaluated as "$\times$".

As shown in Examples described below, nitric acid in such an amount that the pH value in a reference (blank solution) becomes 5 by adding nitric acid is added to a potassium hydroxide solution containing a sample powder of metal particles. If the  metal particles have surface characteristics in which the pH is 6.0 or less at this time, the above-described evaluation shows that the particles can be dispersed in a polar solvent to form an ink. Further, the metal particles are a metal particle powder having an amount of released protons of $3.0 \times 10^{19}$ (number/m$^2$) or less.

The value of copper particles in Patent Literature 3 is different from the value shown by the present invention. Referring to a titration curve disclosed in Patent Literature 3, the values when a powder is added in a state where a pH is 5 in the titration curve as a reference (the accurate titration value is uncertain, but about 1.0 mL of 0.1 mol/L KOH is confirmed) are larger than the values at a pH of 6 (near a pH of 8). Therefore, the metal particles disclosed in Patent Literature 3 are different from the particles according to the present invention.

Next, metal particles dispersed in a polar solvent, which are the object of the present invention, will be described.

<Metal particle>

(Average primary particle diameter)

Particle having surface properties like the present invention are particularly metal particles having an average primary particle diameter, measured by particle observation with a transmission electron microscope (TEM), of 10 to 1000 nm, preferably 20 to 500 nm, more preferably 30 to 300 nm, and further preferably 30 to 150 nm. The minimum value of the particle diameter is defined for the convenience according to the application. According to the method described in the present description, finer particles can be obtained. On the other hand, when the particle diameter exceeds 1000 nm as the upper limit, for example, low-temperature sintering properties are unlikely to be expressed. Therefore, this is not preferable. The particle diameter used herein may be determined by direct measurement of TEM photograph, or determined as an average primary particle diameter by image processing. At this time, the average primary particle diameter is preferably calculated from the results of measurement of at least 200 particles. Further, the average primary particle diameter is preferably calculated as independent particles which do not overlap each other.

There are roughly two kinds of methods for obtaining a particle with such a particle diameter. The first method is a method in which a silver salt, an organic material serving as an organic protective agent having 8 or less carbon atoms in total, and a reducing agent are mixed in water to directly synthesize silver nanoparticles coated with the organic protective agent having 8 or less carbon atoms in total (provided that replacement of the organic protective agent is not eliminated after this).

The second method is a method in which nanoparticles coated with a macromolecular material easy to be removed are synthesized once, and then coated with (replaced by) an organic protective agent having 8 or less carbon atoms in total in accordance with the present invention.

As roughly described, the first method is suitable to acquisition of particles having an average primary particle diameter of 200 nm or less, and the second method is suitable to acquisition of particles having an average primary particle diameter of 200 nm or more.

In the method of direct synthesis by the first method, when an organic protective agent constituted only by single bonds between carbon atoms is used, fine particles having a particle diameter of 30 nm or less can be particularly obtained. When the structure of the protective agent has a double bond or two or more functional groups such as carboxyl groups (hereinafter referred to as "organic protective agent having a double bond or the like"), fine particles having a particle diameter of 30 nm or more tend to be obtained.

In particular, among particles having an average primary particle diameter of 200 nm or less, particles having a relatively smaller particle diameter can be obtained by using a fatty acid having only single bonds. When an organic protective agent having a double bond or the like is used, particles having an average primary particle diameter of 30 nm or more tend to be obtained. A cause of such a difference is often unclear, but the present inventors assume as follows. During precipitation by reduction of metal ions, the adsorption rate to the metal surface of a carboxylic acid compound having a carbon-carbon double bond and that of a compound having a carboxyl group are slightly smaller than that of a general carboxylic acid. Therefore, it is assumed that the growth of metal particles progresses to increase the particle diameter, as compared with precipitation by a method using a known carboxylic acid.

Examples of the organic material having such an effect may include a carboxylic acid compound having a carbon-carbon double bond, a dihydroxyl compound, and a dicarboxyl compound. Among compounds having these structures, examples of the compound having a carbon-carbon double bond include sorbic acid, and examples of the dicarboxyl compound include adipic acid. The compounds having these structures preferably constitute the surface of metal nanoparticles. In the present description, metal particles having an average primary particle diameter of 1 nm to 1000 nm are referred to as "nanoparticles" or "metal nanoparticles." In particular, when the metal is "silver," "silver nanoparticles" are also termed.

In the second method adopted, nanoparticles are coated with macromolecule easy to be removed once, and the macromolecule is replaced, so that the nanoparticles are coated with an organic material having 8 or less carbon atoms in total. The macromolecule used at this time is preferably an imine compound (macromolecular imine), and particularly preferably polyethyleneimine. As the macromolecular imine used herein, macromolecular imine having a molecular weight of 300 or more can be suitably used. Since replacement by the subsequent operation is planned, the upper limit of the molecular weight in this stage is not particularly restricted.

(Organic material existing on surface of particle)

The surface of the metal particles may be coated with an organic material having 8 or less carbon atoms in total. Even in a fine powder, particularly having an average primary particle diameter of 100 nm or less, change is unlikely to occur during storage at room temperature in air since the powder is coated with the organic material including this number of molecules. Further, the particles having excellent storage stability can be obtained.

The organic material constituting the surface of the particles may be coated with a plurality of types of organic materials having different number of carbon atoms. Particles coated with an organic material in which the number of carbon atoms is single rather than multiple are preferable since the degree of dispersion to a solvent is not varied. In consideration of stability of particles, the number of carbon atoms constituting the organic material is preferably 2 to 8, more preferably 3 to 7, and further preferably 4 to 6.

Even when the particles coated with such an organic material as above are nanoparticles (deletion because of duplication), the particles can be stable in air. Therefore, the particles can be obtained in a powder shape. The particles in such a shape are much more convenient than the conventional particles provided in a shape of cake or dispersion liquid.

Further, the resulting particles are easy to be handled. Therefore, the surface of the particles produced by the second method is also desirably coated with an organic material having 8 or less carbon atoms in total. In order to form particles having such a configuration, a desired organic material component having 8 or less carbon atoms in total (carboxylic acid as a main component) is added to temporarily formed particles which are coated with macromolecular imine to perform replacement. In this manner, such particles can be obtained.

<Method for producing particles>

(Formation of particles by first method)

Specifically, when particles are precipitated by the first method, a step group therefor includes a solution preparing step of preparing an aqueous solution of metal as a raw material and a reducing solution, a temperature increasing step of increasing the temperature of the solution, a reaction step of adding the aqueous solution of metal as a raw material to the reducing solution to cause a reaction, an aging step of growing metal particles (in particular, silver nanoparticles) in the solution, a washing step of repeating filtration, water-washing, and dispersion to remove the excess organic material, and a drying step of removing a moisture content in the solution by drying, and if necessary, a replacement step.

(Solution preparing step)

The solution preparing step according to the first method is a step of preparing a raw material aqueous solution (hereinafter referred to as raw material solution) and a reducing solution. The raw material solution is obtained by dissolving a water-soluble silver salt, particularly preferably silver nitrate in pure water. In this case, the silver concentration is 0.01 mol/L or more and 3.0 mol/L or less, preferably 0.01 mol/L or more and 2.0 mol/L or less, and more preferably 0.01 mol/L or more and 1.0 mol/L or less. It is not preferable that the concentration be too low since the reaction efficiency is too poor. Further, it is not preferable that the concentration be too high since the method of the present invention promotes the reaction excessively at one time and the particle diameters are very uneven.

The reducing solution can be obtained by mixing water, aqueous ammonia, an organic material (particularly preferably an organic acid) coating the surface, and an aqueous hydrazine hydrate solution. In this case, the equivalent of a reducing agent to silver is 1 or more, and preferably 2 or more.

The hydrazine hydrate used herein may be a reducing agent capable of reducing metal. Hydrazine hydrate can be used with a reducing agent other than the hydrazine hydrates, and specific examples thereof may include hydrazine, an alkali borohydride (for example, $NaBH_4$), lithium aluminum hydride ($LiAlH_4$), a primary amine, a secondary amine, a tertiary amine, L-ascorbic acid, hydroquinone, gallic acid, formalin, phosphine, gluconic acid, and derivatives thereof.

The amount of the reducing agent to be added to the metal in terms of equivalent falls within a range of 0.5 to 9.0, preferably 0.5 to 8.0, and more preferably 1.0 to 7.0. When the amount is less than 0.5, unreduced metal may remain. Therefore, this is not preferable. On the other hand, when it exceeds 9.0, the amount of the reducing agent may be too high to excessively increase the reaction rate. As a result, the amount of particles to be aggregated may be increased, and finally the particle diameters may vary widely. Therefore, this is not preferable.

Further, aqueous ammonia to be added to the reducing solution acts as a dissolution promoter to dissolve an organic material having 8 or less carbon atoms in total with which the surface is coated. This addition is preferable from the viewpoint of efficiency of operation. Thus, the addition of aqueous ammonia makes the organic material to be easily dissolved. In particular, an organic material having many carbon atoms is unlikely to be dissolved without addition of aqueous ammonia. Therefore, the addition of aqueous ammonia is essential.

In the first method, the molar ratio of a surfactant for protecting the surface of metal nanoparticles to a metal component, which can be represented by a ratio of surfactant/metal component, may fall within a range of 4.0 or less, preferably 0.1 to 3.0, and further preferably 0.3 to 2.0. When it exceeds 4.0, silver in which the amount of a protective agent coating the surface of the silver is too large is obtained. This shows that many impurities may remain in a silver composition to be produced finally. It becomes difficult to obtain a silver film having a high purity grade. Therefore, this is not preferable.

(Temperature Increasing Step)

The raw material solution and the reducing solution as described above are heated together to about 40 to 80°C. At this time, this heating at the same time is important for preventing an accident caused by precipitous temperature difference therebetween and securing safety when silver is reduced in the subsequent step. This is because the reaction is a reaction to proceed rapidly. Therefore, it is necessary to take care of not varying the reaction as much as possible. When the temperature in a reaction vessel is out of the above-described temperature range, for example, when the temperature is lower than 40°C, the degree of supersaturation of metal increases, nucleation is more promoted, and the proportion of fine particles tends to be increased. When the temperature is higher than 80°C, nucleation is suppressed, but growth and aggregation of particles tend to be promoted.

(Reaction Step)

The raw material solution and the reducing solution are each stabilized at a set temperature, and then, the raw material solution is added to the reducing solution to promote the reaction at a time. At this time, it is preferable that the reaction be promoted as uniformly as possible. The reaction may be uniformed under pressure according to the scale (manufacturing scale). Further, the solution may be stirred at a high speed during reaction so that the solution is uniformed as much as possible.

At this time, if the raw material solution is not added at once, the solution becomes a heterogeneous system, and nucleation and particle agglomeration may occur simultaneously. Finally, non-uniform silver nanoparticles having a wide particle distribution may be obtained. Therefore, the expression "added at once" means that when reaction factors such as the concentration of a reduction agent or a protection agent, pH, and temperature do not substantially change due to the timing of adding the aqueous silver nitrate solution. If the reaction factors do not substantially change due to the timing of adding the aqueous silver nitrate solution, the concrete method is not particularly limited.

(Aging Step)

After mixing the reaction solution, it is continuously stirred for about 10 to 30 minutes until the growth of the particles is completed. The end-point of reaction is determined by sampling the reaction solution, and adding dropwise hydrazine hydrate to the sampled solution, and confirming whether or not a reaction of unreduced silver occurs.

(Washing Step)

The obtained slurry is subjected to filtration or centrifugation, to separate a product and a mother liquid from the solution. The particles according to the present invention are obtained in a form in which the particles are moderately aggregated. Therefore, solid-liquid separation can be achieved even through the usual method such as filtration or, in a case of large-scale, filter press.

After solid-liquid separation through this filtration, the excess organic component, reducing agent, silver nitrate, or the like is removed by water-washing. After the filtration, sufficient water-washing may be performed. For example, a method of confirming sufficient water-washing by measurement of conductivity of the solution after water-washing can be adopted. This is because sufficient water-washing decreases the conductivity of the solution.

(Drying Step)

The obtained lump of metal (lump of silver) is dried under a temperature condition of 100°C or lower, preferably 80°C or lower, and further preferably 60°C or lower, for 0.5 hours or more, preferably 2 hours or more, and further preferably 6 hours or more. During this drying, the lump of metal can be dried in a drier which is held at a constant temperature, but may be dried under vacuum.

(Replacement Step)

The resulting metal powder coated with the organic material (coated metal powder) is added to a solvent such as isopropyl alcohol, and the mixture is stirred. To the mixture, a treatment liquid in which an organic material for replacement is dissolved is added. The resulting mixture is stirred at normal temperature for about 1 to 6 hours. As a result, the organic material existing on the surface can be replaced therewith. Therefore, a carboxylic acid which is a substance to be replaced with can be easily replaced with as long as particles are the coated metal powder according to the present invention. In such a configuration, a metal powder having desired surface properties or physical properties can be obtained.

(Formation of Particles by Second Method)

In the second method, particles can be formed through a route including a step of forming silver nanoparticles coated with macromolecular imine as a first stage (which roughly includes a solution preparing step of raw material and a reaction step) and a step of replacing the macromolecular imine coating the surface with an organic material having 8 or less carbon atoms in total as a second stage. The details of how to provide are as follows.

(Solution Preparing Step)

Raw material components including silver nitrate and the like are dissolved in an aqueous solution. To the solution, aqueous ammonia or ammonium salt is added to form an ammine complex of silver. Since the number of ammonium groups coordinated to the silver atom is 2, the equivalent of ammonium to be added relative to the silver is preferably 2 or more. This solution is referred to as a complex solution.

As a reducing agent for reducing silver, any reducing agent used in the first method can be used. In particular, a hydrazine solution is suitably used. This is because there are comparatively many procedures for treating with hydrazine which have been investigated, and the kinds thereof can be appropriately selected to select the treatment procedure depending on needs. Further, in the preparation of the reducing solution, the equivalent of hydrazine to the amount of contained silver may be 1 or more.

The macromolecular imine compound may be co-present during reduction. Therefore, the macromolecular imine compound may be added to a silver raw material solution before reduction or added to a reducing solution. The amount of the compound to be added to the mass of silver in the liquid may be 0.1 % by mass or more.

(Reaction Step)

The reducing agent is allowed to act in the presence of the resulting complex solution and the above-described macromolecular imine to obtain silver nanoparticles of which surface is coated with the macromolecular imine. The addition rate of the reducing agent (in the presence of the macromolecular imine compound according to circumstances) is preferably as high as possible, that is, 1 equivalent/min or more. This means that when the amount of the reducing agent is set to one equivalent ratio to silver, a solution containing the reducing agent is added and mixed for 1 minute or shorter. From the viewpoint of rapid promotion of the reaction, the mixing may be performed under stirring.

(Replacement Step)

Since the reaction rapidly proceeds, the resultant is aged for about 10 minutes after the reaction to complete the reaction. Subsequently, an organic material having 8 or less carbon atoms in total (carboxylic acid as a main component) is added to replace the macromolecular imine formed on the surface therewith. The completion of the reaction can be determined, for example, by the presence or absence of the reaction which is caused by extracting part of the reaction solution, followed by adding Vensil. The organic material used for replacement may be added in an equivalent to the amount of silver of 0.02 or more. After the addition of the material for replacement, the mixture is stirred for 10 minutes or more to replace the macromolecular imine coating the surface with a carboxylic acid having 8 or less carbon atoms in total. Thus, particles with an average primary particle diameter of 200 nm or more coated with the organic material having 8 or less carbon atoms in total can be obtained.
The slurry of silver nanoparticles thus obtained is subjected to publicly-known filtration and water-washing (using filter press according to the scale), followed by drying, to obtain silver nanoparticle powder.

(BET value)

The specific surface area of the metal particle powder according to the present invention measured by the BET method is 0.1 to 60 $m^2$/g, preferably 0.3 to 55 $m^2$/g, and more preferably 0.5 to 50 $m^2$/g. The metal particles falling within the range are preferable since the viscosity adjustment during formation of paste is easy.
Next, an ink using the metal particles of the present invention (hereinafter referred to as "conductive paste") will be described.

<Dispersion Medium>

A conductive paste can be obtained by dispersing the above-described silver nanoparticles in a dispersion medium. The dispersion medium used at this time is a polar solvent. When a polar solvent is selected as the dispersion medium, the dispersant medium has a low vapor pressure and is suitably handled.
In particular, a solvent compatible with a thermosetting resin may be used. An ester-based, an ether-based, a ketone-based, an ether ester-based, an alcohol-based, a hydrocarbon-based, or an amine-based organic solvent is preferably used.
Specific examples thereof may include water, diols such as octanediol, alcohol, polyol, glycol ether, 1-methylpyrrolidinone, pyridine, terpineol, butyl carbitol, butyl carbitol acetate, texanol, phenoxypropanol, diethyleneglycol monobutyl ether, diethylene glycol monobutyl ether acetate, γ-butyrolactone, ethylene glycol monomethyl ether acetate, ethylene glycol monoethyl ether acetate, methoxybutyl acetate, methoxypropyl acetate, diethylene glycol monoethyl ether acetate, ethyl lactate, and 1-octanol.
Since a conductive paste is generally used to form a circuit by printing, a solvent having a low volatility and a high boiling point during printing is particularly preferably used, and terpineol, butyl carbitol acetate, or octanediol is more preferably used. Further, a plurality of types of solvents may be used in combination. The amount of the solvent is preferably 30% by mass or less, more preferably 25% by mass or less, and further preferably 20% by mass or less, relative to the total amount of a thermosetting resin and a metal component.

<Dispersant>

A dispersant that allows the silver nanoparticle powder to be well dispersed may be added to the conductive paste according to the present invention. The metal particles of the present invention primarily have surface characteristics of dispersibility in a polar solvent. However, such a dispersant is further used to secure the independence of silver nanoparticles in the conductive paste. The dispersant is not limited as long as it has affinity with the surface of silver nanoparticles and also affinity with a dispersion medium, and may be a commercially available product. Not only a single kind of dispersant is used but also a plurality of dispersants may be used in combination. The amount of the dispersant to be added is preferably 6.0% by mass or less, preferably 3.0% by mass or less, and more preferably 1.0% by mass or less, relative to the weight of the added silver nanoparticles.

Typical examples of a dispersant having such properties may include a low molecular weight anionic compound such as a fatty acid salt (soap), a salt of an α-sulfo fatty acid ester (MES), an alkylbenzene sulfonate (ABS), a linear alkylbenzene sulfonate (LAS), an alkyl sulfate (AS), a salt of an alkyl ether sulfate (AES), and alkyl sulfuric acid triethanol; a low molecular weight nonionic compound such as fatty acid ethanolamine, polyoxyethylene alkyl ether (AE), polyoxyethylene alkyl phenyl ether (APE), sorbitol, and sorbitan; a low molecular weight cationic compound such as an alkyltrimethylammonium salt, dialkyldimethylammonium chloride, and alkyl pyridinium chloride; a low molecular weight amphoteric compound such as alkylcarboxylbetaine, sulfobetaine, and lecithin; a macromolecular aqueous dispersant typified by a formalin condensate of naphthalene sulfonate, polystyrene sulfonate, polyacrylate, a salt of copolymer of a vinyl compound and a carboxylic acid-based monomer, carboxymethylcellulose, and polyvinyl alcohol; a macromolecular nonaqueous dispersant such as a partial alkyl ester of polyacrylic acid, and polyalkylene polyamine; and a macromolecular cationic dispersant typified by polyethyleneimine, and an aminoalkyl methacrylate copolymer. However, dispersants having structures other than those exemplified above are not excluded, as long as they can be suitably applied to the particles of the present invention.

Specific names of the dispersant are as follows, but the use of a product other than those described below is not excluded as long as the product has the properties described above. Examples thereof may include BEAULIGHT LCA-H and LCA-25H available from Sanyo Chemical Industries, Ltd., FLOWLEN DOPA-15B available from KYOEISHA CHEMICAL CO., LTD., SOLPLUS AX5, SOLSPERSE 9000, and SOLTHIX 250 available from The Lubrizol Corporation, EFKA4008 available from EFKA ADDITIVES, AJISPER PA111 available from Ajinomoto Fine-Techno Co., Inc., TEXAPHOR-UV21 available from Cognis Japan Ltd., DisperBYK2020 and BYK220S available from BYK Japan KK, DISPARLON 1751 N and HIPLAAD ED-152 available from Kusumoto Chemicals, Ltd., FTX-207S and FTERGENT 212P available from NEOS COPANY LIMITED, AS-1100 available from Toagosei Co., Ltd., KAOCER 2000, KDH-154, MX-2045L, HOMOGENOL L-18, and RHEODOL SP-010V available from Kao Corporation, EPAN U103, CYANOL DC902B, NOIGEN EA-167, and PLYSURF A219B available from DAI-ICHI KOGYO SEIYAKU CO., LTD., MEGAFAC F-477 available from DIC Corporation, SILFACE SAG503A, and Dynol 604 available from Nissin Chemical Industry Co., Ltd., SN-SPERSE 2180 and SN-LEVELLER S-906 available from SAN NOPCO LIMITED, and S-386 available from AGC SEIMI

CHEMICAL CO., LTD.

<Resin>

The conductive paste according to the present invention can be obtained as a resin-type paste by adding a resin in addition to silver nanoparticles and a dispersion medium. The addition of a resin can enhance shape maintainability after printing and adhesion to a base material. As a resin to be added, any widely known thermosetting or thermoplastic resins can be used. The amount of the resin to be added is 2 to 20% by mass, and preferably 2 to 15% by mass, relative to the total mass of the total silver mass of the silver nanoparticles and the resin. When the amount of a resin to be added is too large, the resin remains in an amount more than necessary in a wiring after firing to thereby remarkably affect the conductivity. Therefore, it is not preferable. On the other hand, when the amount to be added is small, adhesion between a wiring and a substrate cannot be secured. Therefore, it is necessary that the amount to be added is at least about 2% by mass for use as a resin type (wiring) paste.

(Thermoplastic resin)

In the present invention, any known thermoplastic resins can be used. In particular, it is preferable that an acrylic resin, a polyester resin, or a polyurethane resin be added. The following resins are generally known. However, the use of thermoplastic resins other than those in the following list is not excluded as long as they have the above-described properties.

A polyurethane resin is not particularly limited as long as it is a commercially available thermoplastic urethane resin. Examples thereof may include a thermoplastic urethane resin which has a polyol component and an organic polyisocyanate as essential components, and is obtained by polymerization using a chain-elongating agent or a terminator as an optional component.

Examples of polyisocyanate used herein may include hexamethylene diisocyanate (HDI), lysine isocyanate (LDI), isophorone diisocyanate (IPDI), xylylene diisocyanate (XDI), hydrogenated XDI (H6-XDI), hydrogenated MDI (H12-MDI), trans-cyclohexane-1,4-diisocyanate, tetramethylxylene diisocyanate (TMXDI), 1,6,11-undecane triisocyanate, 1,8-diisocyanate-4-isocyanate methyloctane, 1,3,6-hexamethylene triisocyanate, bicycloheptane triisocyanate, trimethylhexamethylene diisocyanate (TMDI), and derivatives thereof. Among them, HDI, IPDI, H6-XDI, and H12-MDI are suitable in terms of low yellowing properties.

A polyol used with the above-described polyisocyanate may be preferably a polyol having a low crystallinity. Specific examples thereof may include polyethylene adipate (PEA), polybutylene adipate (PBA), polycarbonate (PCD), polytetramethylene glycol (PTMG), polycaprolactone polyester (PCL), and polypropylene glycol (PPG).

An acrylic resin represents a resin having a (meth)acrylate unit and/or a (meth)acrylic acid unit as a constituent unit. The acrylic resin may be a resin having a constituent unit derived from a (meth)acrylate or a derivative of a (meth) acrylic acid.

Examples of the (meth)acrylate unit used herein may include constituent units derived from monomers such as methyl (meth)acrylate, ethyl (meth)acrylate, n-propyl (meth)acrylate, n-butyl (meth)acrylate, tert-butyl (meth)acrylate, n-hexyl (meth)acrylate, cyclohexyl (meth)acrylate, 2-ethylhexyl (meth)acrylate, benzyl (meth)acrylate, dicyclopentanyloxyethyl (meth)acrylate, dicyclopentanyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, methyl 2-(hydroxymethyl)acrylate, ethyl 2-(hydroxymethyl)acrylate, and methyl 2-(hydroxyethyl)acrylate.

Further, examples of the (meth)acrylic acid unit may include constituent units derived from monomers such as acrylic acid, methacrylic acid, crotonic acid, 2-(hydroxymethyl)acrylic acid, and 2-(hydroxyethyl)acrylic acid.

As a polyester resin, any generally known resins can be used. Examples of a method for producing the same may include a method for forming a polyester resin by condensation polymerization of a low molecular diol with a polycarboxylic acid or an ester-forming derivative thereof (such as acid anhydride, lower alkyl (having 1 to 4 carbon atoms) ester, and acid halide), and a method for forming a polyester resin by ring-opening polymerization of a lactone monomer using a low molecular diol as an initiator. Further, the use of a mixture of 2 or more kinds thereof is also not restricted.

(Thermosetting resin)

In the present invention, any known thermosetting resins can be used. Specifically, the thermosetting resin can be selected from a phenolic resin, an epoxy resin, an unsaturated polyester resin, an isocyanate compound, a melamine resin, a urea resin, and a silicone resin. Here, an epoxy resin and a phenolic resin will be described.

The epoxy resin according to the present invention has an effect of improving the weatherability of a coated film. Specifically, a mono-epoxy compound, a polyvalent epoxy compound, or a mixture thereof may be used as an epoxy resin. Examples of the mono-epoxy compound may include butyl glycidyl ether, hexyl glycidyl ether, phenyl glycidyl ether, allyl glycidyl ether, p-tert-butylphenyl glycidyl ether, ethylene oxide, propylene oxide, p-xylyl glycidyl ether, glycidyl acetate, glycidyl butyrate, glycidyl hexoate, and glycidyl benzoate.

Examples of the polyvalent epoxy compound may include a bisphenol type epoxy resin obtained by the glycidilation of bisphenols such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, and tetracfluorobisphenol A; an epoxy resin obtained by the glycidilation of other dihydric phenols such as biphenol, dihydroxynaphtalene, and 9,9-bis(4-hydroxyphenyl)fluorene; an epoxy resin obtained by the glycidilation of trisphenols such as 1,1,1-tris(4-hydroxyphenyl)methane, and 4,4-(1-(4-(1-(4-hydroxyphenyl)-1-methylethyl)phenyl)ethylidene)bisphenol; an epoxy resin obtained by the glycidilation of tetrakisphenols such as 1,1,2,2,-tetrakis(4-hydroxyphenyl)ethane; a novolac type epoxy resin obtained by the glycidilation of novolacs such as phenol novolac, cresol novolac, bisphenol A novolac, brominated phenol novolac, and brominated bisphenol A novolac; an epoxy resin obtained by the glycidilation of polyphenols, and an aliphatic ether type epoxy resin obtained by the glycidilation of polyhydric alcohols such as glycerol and polyethyleneglycol; an ether ester type epoxy resin obtained by the glycidilation of hydroxycarboxylic acid such as p-oxybenzoic acid and $\beta$-oxynaphthoic acid; an ester type epoxy resin obtained by the glycidilation of polycarboxylic acid such as phthalic acid, and terephthalic acid; a glycidyl type epoxy resin such as a compound obtained by the glycidilation of an amine compound, such as 4,4-diaminodiphenylmethane and m-aminophenol, and an amine type epoxy resin including triglycidyl isocyanurate, and an alicyclic epoxide such as 3,4-epoxycyclohexylmethyl-3',4'-epoxycyclohexane carboxylate.

Among the epoxy resins, a polyvalent epoxy compound is preferable from the viewpoint of enhancement of the shelf stability. Among the polyvalent epoxy compounds, a glycidyl type epoxy resin is preferable since the productivity is significantly high. Further, an epoxy resin obtained by the glycidilation of polyhydric phenols is preferable since the adhesion and heat resistance of the cured material are excellent. A bisphenol type epoxy resin is more preferable, and an epoxy resin obtained by the glycidilation of bisphenol A and an epoxy resin obtained by the glycidilation of bisphenol F are particularly preferable.

It is preferable that the form of a resin be liquid. It is preferable that the epoxy equivalent be 300 or less. When the epoxy equivalent exceeds 300, the composition becomes solid, and the resistance is increased. Therefore, the composition is difficult to handle during use. Accordingly, this is not preferable.

Examples of a thermosetting phenolic resin may include a liquid novolac type phenolic resin, a cresol novolac resin, a dicyclopentadiene-based phenolic resin, a terpene-based phenolic resin, a triphenolmethane-based resin, and a phenolaralkyl resin.

<Other component to be added>

In addition to the dispersant, various additives may be added to improve the stability and printing property of the paste. Examples thereof may include a leveling agent, a viscosity modifier, a rheology control agent, an antifoam, and a sagging preventing agent. In such a configuration, a conductive paste having metal particles as a main component can be formed.

Examples

<Example 1>

As a production example of particles shown in Examples, production of silver nanoparticles coated with sorbic acid is exemplified. In a 500-mL beaker, 13.4 g of silver nitrate (available from TOYO KAGAKU, INC.) was dissolved in 72.1 g of pure water to prepare a silver solution.

1.34 L of pure water was put in a 5-L beaker, and nitrogen was bubbled through the water for 30 minutes to remove dissolved oxygen while the temperature was increased to 60°C. 17.9 g of sorbic acid (available from Wako Pure Chemical Industries, Ltd.) was added thereto. Subsequently, 2.82 g of 28% aqueous ammonia (available from Wako Pure Chemical Industries, Ltd.) was added to adjust the pH. The addition of aqueous ammonia was assumed to initiate a reaction. Five minutes after the initiation of the reaction, 5.96 g of hydrous hydrazine (purity: 80%, available from Otsuka Chemical Co., Ltd.) was added under stirring.

Nine minutes after initiation of the reaction, the silver solution was added and allowed to react. Then, the mixture was aged for 30 minutes to form silver nanoparticles coated with sorbic acid. The nanoparticles were filtrated through a filter paper No. 5C, and washed with pure water to obtain an aggregate of silver nanoparticles. The aggregate was dried in a vacuum drying chamber in air under the conditions of 80°C for 12 hours to obtain a dry powder of aggregate of silver nanoparticles.

The obtained particles were confirmed to be a silver nanoparticle powder having an average primary particle diameter obtained by a SEM image of 60 nm and a BET value of 6.5 $m^2$/g. By the method for evaluating surface properties, that is, when 0.5 g of the sample powder was added to a mixed solution with a pH of 11 of 100 mL of a potassium hydroxide solution and 10 mL of ethyl alcohol and then 0.10 mol/L nitric acid in an amount in which pH became 5 by adding 0.10 mol/L nitric acid to the mixed solution with a pH of 11 of 100 mL of a potassium hydroxide solution (blank solution) and 10 mL of ethyl alcohol was added, the indicated pH value was 4.96. The change of the powder with time was confirmed by the BET method under the environment at normal temperature over a period of half year. The change was less than 1 %. Therefore, sintering between the particles was not confirmed.

The value of protons ($H^+$) released from the sample powder is calculated by the above mentioned expression (1) to be $1.1 \times 10^{18}$ (number/$m^2$). The evaluation expressed as o was visually confirmed in the dispersibility evaluation, that is, the state of the aggregated powder was confirmed with a grind gauge to be less than 5.0 $\mu$m. The powder in an ink state was confirmed to have excellent dispersibility. Characteristics and the like are also shown in Table 1.

<Example 2>

The operation was repeated in the same manner as in Example 1 except that the reaction temperature was changed to 40°C. The evaluation was performed in the same manner as in Example 1. The obtained particles were confirmed to be a silver nanoparticle powder having an average primary particle diameter obtained by a SEM image of 100 nm and a BET value of 4.4 $m^2$/g. The evaluation results such as physical properties of the obtained substance are shown in Table 1. The change of the powder with time was confirmed by the BET method under the environment at 40°C over a period of half year. The change was less than 1 %. Therefore, sintering between the particles was not confirmed.

<Example 3>

25 g of metal powder coated with sorbic acid which was obtained in Example 2 was added to SOLMIX (trade name of mixed alcohol) and the mixture was mixed in a solvent with stirring at 25°C. To the mixture, a treatment liquid in which 10 g of acetic acid was added to 125 mL of SOLMIX was added to replace the organic material coating the surface of the silver nanoparticles, that was, sorbic acid with acetic acid. In Gas chromatography-Mass spectrometry (GC-MS), gases were collected by heating, and the replacement on the surface of the particles was confirmed by the presence or absence of replacement of the component constituting the surface. The evaluation results such as physical properties of the obtained substance are shown in Table 1. The change of the powder with time was confirmed by the BET method under the environment at 40°C over a period of half year. The change was less than 1 %. Therefore, sintering between the particles was not confirmed.

<Examples 4 to 10>

The operation was repeated in the same manner as in Example 3 except that the substance to be replaced in Example 3 was changed into octanoic acid (Example 4), malonic acid (Example 5), butanoic acid (Example 6), lactic acid (Example 7), propionic acid (Example 8), hexanoic acid (Example 9), or oleic acid (Example 10). In addition, the evaluation was performed in the same manner as in Example 1. The evaluation results such as physical properties of the obtained substance are shown in Table 1. The change of each of the powders with time was confirmed by the BET method under the environment at 40°C over a period of half year. The change was less than 1%. Therefore, sintering between the particles was not confirmed.

<Example 11>

As a production example of 300-nm particles, production of silver nanoparticles coated with sorbic acid is exemplified. In a 5-L beaker, 35.0 g of silver nitrate (available from TOYO KAGAKU, INC.) and 0.04 g of copper nitrate dihydrate  (available from Wako Pure Chemical Industries, Ltd.,) were dissolved in 3700 g of pure water to prepare a silver solution.
200 mL of pure water was placed in 500-mL beaker. In the beaker, 4.5 g of hydrous hydrazine (purity: 80%, available from Otsuka Chemical Co., Ltd.) and 0.546 g of polyethyleneimine (average molecular weight: about 600, available from Wako Pure Chemical Industries, Ltd.) were mixed to prepare a reducing agent solution.
The silver solution was heated to 60°C, and 49.06 g of 28% aqueous ammonia (available from Wako Pure Chemical Industries, Ltd.) was added to prepare an ammine complex of silver. The addition of aqueous ammonia was assumed to initiate a reaction. Three minutes after the initiation of the reaction, the reducing agent solution was added under stirring.
Thirteen minutes after the initiation of the reaction, 23.11 g of sorbic acid (available from Wako Pure Chemical Industries, Ltd.,) was added, and the mixture was aged for additional 10 minutes to form silver nanoparticles coated with sorbic acid. The nanoparticles were filtrated through a filter paper No. 5C, and washed with pure water to obtain an aggregate of silver nanoparticles. The aggregate was dried in a vacuum drying chamber in air under the conditions of 80°C for 12 hours to obtain a dry powder of the aggregate of the silver nanoparticles.
The evaluation results such as physical properties of the obtained substance are shown in Table 1. The change of the powders with time was confirmed by the BET method under an environment at 40°C over a period of half year. The change was less than 1%. Therefore, sintering between the particles was not confirmed.

<Comparative Example 1 >

32.1 g of isobutyl alcohol (guaranteed reagent available from Wako Pure Chemical Industries, Ltd.) as a reaction medium and also as a reducing agent, 55.3 g of oleylamine (available from Wako Pure Chemical Industries, Ltd., molecular weight: 267), and 6.89 g of silver nitrate crystal (available from KANTO CHEMICAL CO.,INC.,) as a silver compound were prepared, mixed, and stirred with a stir blade connected to a motor. Thus, silver nitrate was dissolved. This solution was poured into a  container equipped with a reflux condenser and the container was placed in an oil bath. The solution was heated to 110°C with stirring with a stir blade connected to a motor while a nitrogen gas was blown into the container as an inert gas at a flow rate of 500 mL/min. The solution was refluxed for 5 hours at 110°C, and 4.30 g of diethanol amine (available from Wako Pure Chemical Industries, Ltd., molecular weight: 106), which was a secondary amine, was added as a reduction auxiliary agent. The mixture was kept for 1 hour in this state to complete the reaction.
After the completion of the reaction, the slurry was transferred into a decantation tank capable of removing a supernatant, and allowed to stand all day and night. The supernatant was removed, and then the resultant was put in a 500-mL beaker. Further, 200 mL of methyl alcohol was added, and the mixture was stirred with a magnetic stirrer for 1 hour.
The mixture was then allowed to stand for 2 hours to precipitate an aggregate lump of silver nanoparticles coated with oleylamine. The mixture was subjected to additional decantation to separate the aggregate lump of silver nanoparticles from the washing liquid. The washing operation was repeated twice, and was completed.
The obtained particles were dried under vacuum to remove the washing solvent. Thus, a metal nanoparticle powder coated with oleylamine was obtained. The obtained particles was confirmed to be a silver nanoparticle powder having an average primary particle diameter of 10 nm obtained by a TEM image and a BET value of 0.45 m$^2$/g. By the method for evaluating surface properties, that is, when 0.5 g of the sample powder was added to 100 mL of a potassium hydroxide solution with a pH of 11 and then 0.10 mol/L nitric acid in an amount in which pH became 5 by adding 0.10 mol/L nitric acid to 100 mL of a potassium hydroxide solution with a pH of 11 (blank solution) was added, the indicated pH value was 6.18.

The value of protons (H$^+$) released from the sample powder was calculated by the above mentioned expression (1) to be $3.5 \times 10^{19}$ (number/m$^2$). The evaluation expressed as $\times$ was visually confirmed in the dispersibility evaluation, that is, the state of the aggregated powder was confirmed with a grind gauge to exceed 5.0 $\mu$m. The powder in an ink state was not confirmed to be appropriate for a liquid. Characteristics and the like are also shown in Table 1. The change with time of the powder was confirmed under the environment at 40°C over a period of half year, and sintering was confirmed to such an extent that visual judgment is possible.

[Table 1]

| | SURFACE-COATING SUBSTANCE | | PARTICLE DIA. (nm) | INDICATED pH VALUE | AMOUNT OF PROTON TO BE RELEASED (number/m$^2$) | DISPERSIBILITY | |
| --- | --- | --- | --- | --- | --- | --- | --- |
| | ORIGINAL SURFACE-COATING SUBSTANCE | REPLACEMENT SUBSTANCE | | | | VISUAL OBSERVATION | GRIND GAUGE |
| EXAMPLE 1 | SORBIC ACID | - | 60 | 4.96 | 1.1E+18 | ○ | <2.5μm |
| EXAMPLE 2 | SORBIC ACID | - | 100 | 4.87 | 1.8E+18 | ○ | <2.5μm |
| EXAMPLE 3 | SORBIC ACID | ACETIC ACID | 100 | 5.25 | 2.1E+18 | ○ | <2.5μm |
| EXAMPLE 4 | SORBIC ACID | OCTANOIC ACID | 100 | 4.99 | 8.7E+17 | ○ | <2.5μm |
| EXAMPLE 5 | SORBIC ACID | MALONIC ACID | 100 | 4.74 | -1.2E+18 | Δ | <2.5μm |
| EXAMPLE 6 | SORBIC ACID | BUTANOIC ACID | 100 | 5.36 | 2.3E+18 | ○ | <2.5μm |
| EXAMPLE 7 | SORBIC ACID | LACTIC ACID | 100 | 4.20 | -1.4E+19 | Δ | <4.5μm |
| EXAMPLE 8 | SORBIC ACID | PROPIONIC ACID | 100 | 5.24 | 1.9E+18 | ○ | <2.5μm |
| EXAMPLE 9 | SORBIC ACID | HEXANOIC ACID | 100 | 5.61 | 2.9E+18 | ○ | <2.5μm |
| EXAMPLE 10 | SORBIC ACID | OLEIC ACID | 100 | 4.68 | -2.0E+18 | Δ | <4.5μm |
| EXAMPLE 11 | SORBIC ACID | - | 300 | 5.63 | 1.3E+17 | ○ | <2.5μm |
| COMPARATIVE EXAMPLE | OLEYLAMINE | - | 10 | 6.18 | 3.5E+19 | × | >5.0μm |

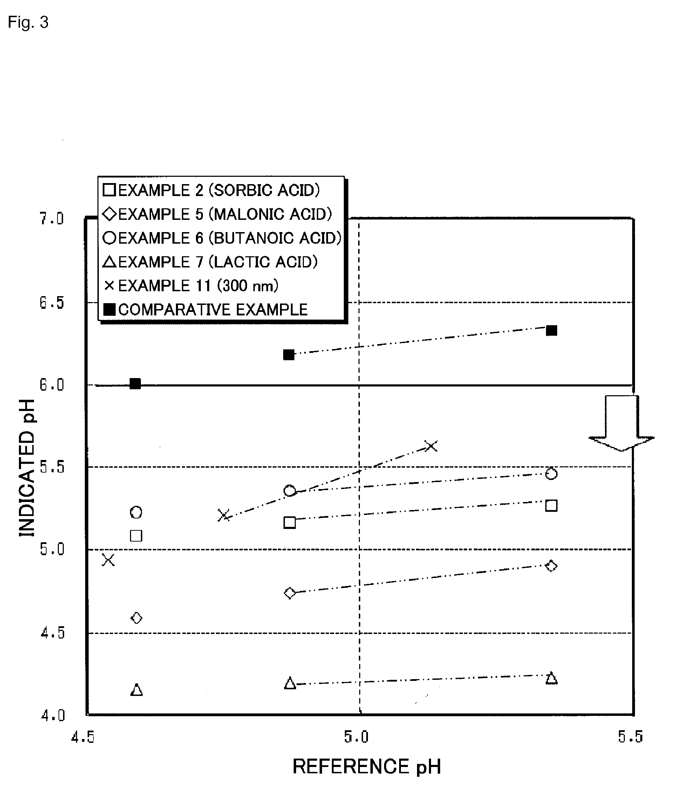

FIG. 3 is a graph showing a correlation between a pH value (reference pH value) of a blank solution when 0.10 mol/L nitric acid is added to 100 mL of a potassium hydroxide solution with a pH of 11 (the blank solution) and a pH value (indicated pH value) when 0.1 mol/L nitric acid is added to 100 mL of a potassium hydroxide solution with a pH of 11 to which 0.5 g of sample powder has been added. The horizontal axis represents the reference pH value, and the vertical axis represents the indicated pH value. The surface characteristics of the present invention are measured. Thus, a profile shown in FIG. 1 can be obtained. The metal particles dispersed in a polar solvent according to the present invention have an indicated pH of 6.0 or less when the reference pH is 5.0. The indicated pH at a reference pH of 5 in FIG. 3 is calculated by interpolation of a value at a pH of 5.0 from the measured values near to the reference pH of 5.0. In FIG. 3, a straight line obtained by interpolating the data near to the reference pH of 5.0 is represented by a two-dot chain line.

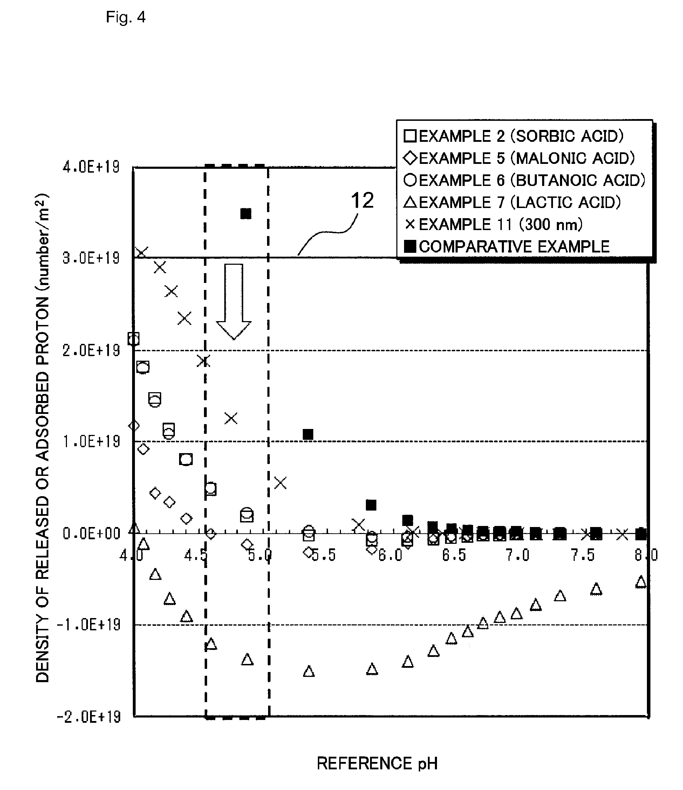

FIG. 4 shows the graph showing a correlation between a pH value (reference pH value) of a blank solution when 0.10 mol/L nitric acid is added to a mixed solution with a pH of 11 of 100 mL of a potassium hydroxide solution (blank solution) and 10 mL of ethyl alcohol and the amount (number/m$^2$) of protons released from or adsorbed by particles calculated by the expression (1). The horizontal axis represents the reference pH value, and the vertical axis represents the amount (number/m$^2$) of protons obtained by the expression (1). In the metal particles dispersed in a polar solvent according to the present invention, the number of released protons (H$^+$) is $3.0 \times 10^{19}$ (number/m$^2$) or less (below the straight line 12) when the reference pH is 5.

Industrial Applicability

According to the present invention, the metal particle powder having excellent redispersibility to a polar solvent, and a paste using the metal particle-containing composition can be obtained. Therefore, the present invention can be suitably utilized in various applications using the composition or dispersion containing the fine silver nanoparticles. For example, the present invention can be utilized in various applications, such as electrode formation for FPD / solar cells / organic EL, RFID wire formation, a fine trench, a wire which is embedded in via hole contact hole or the like, a colorant for automobile or ship coatings, a carrier on which a biochemical substance for the medical, diagnostic, or biotechnology fields is adsorbed, an antimicrobial coating utilizing an antimicrobial effect, a catalyst, a conductive adhesive, a conductive paste formed by mixing with a resin or a flexible printed circuit board using such a conductive paste, a high-flexibility shield, and a capacitor.

Reference Signs List

1    stream automatic potentiometric titrator
2    tank
3    pH meter
4    titrator of aqueous nitric acid solution
5    nitrogen gas introducing pipe
6    magnetic stirrer
7    stir bar
8    alternating-current magnetic field

**Claims**

1.  A metal particle powder satisfying a condition that when aqueous nitric acid solution with 0.10 mol/L is added to a mixed solution of 100 mL of potassium hydroxide solution with a pH of 11 (blank solution) and 10 mL of ethyl alcohol with 0.5 g of a metal powder to be evaluated being added thereto by a quantity allowing the mixed solution to exhibit a pH of 5, the mixed solution entirely exhibits a pH of 6.0 or less.

2.  A metal particle powder in which a calculated number of protons (H$^+$) released from metal particles to be evaluated is $3.0 \times 10^{19}$ (number/m$^2$) or less when nitric acid in an amount in which pH becomes 4.5 to 5.0 by adding 0.10 mol/L nitric acid to a mixed solution with a pH of 11 of 100 mL of a potassium hydroxide solution (blank solution) and 10 mL of ethyl alcohol is added to a solution obtained by adding 0.5 g of a sample powder to 100 mL of a potassium hydroxide solution with a pH of 11.

3.  The metal particle powder according to claim 1 or 2, wherein the metal particle has a surface composed of an organic material having 8 or less carbon atoms in total.

4. The metal particle powder according to any of claims 1 to 3, having a property in which sintering between the particles does not occur when maintaining in air at 40°C.

5. A metal paste comprising the metal particle powder according to any of claims 1 to 4, and a dispersion solvent.

6. A conductive paste comprising the metal particle powder according to any of claims 1 to 4, a dispersion solvent, and at least one kind of resin.

Fig. 1

Fig. 2

Fig. 3

Legend:
□ EXAMPLE 2 (SORBIC ACID)
◇ EXAMPLE 5 (MALONIC ACID)
○ EXAMPLE 6 (BUTANOIC ACID)
△ EXAMPLE 7 (LACTIC ACID)
× EXAMPLE 11 (300 nm)
■ COMPARATIVE EXAMPLE

Y-axis: INDICATED pH (4.0, 4.5, 5.0, 5.5, 6.0, 6.5, 7.0)
X-axis: REFERENCE pH (4.5, 5.0, 5.5)

Fig. 4

## INTERNATIONAL SEARCH REPORT

| International application No. |
| --- |
| PCT/JP2012/050956 |

A. CLASSIFICATION OF SUBJECT MATTER
*B22F1/02*(2006.01)i

According to International Patent Classification (IPC) or to both national classification and IPC

B. FIELDS SEARCHED

Minimum documentation searched (classification system followed by classification symbols)
B22F1/02

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2009-084614 A (DOWA Electronics Materials Co., Ltd.), 23 April 2009 (23.04.2009), claims (Family: none) | 1-6 |
| Y | JP 2007-204837 A (Dowa Holdings Co., Ltd.), 16 August 2007 (16.08.2007), claims (Family: none) | 1-6 |
| Y | JP 2005-179096 A (Hitachi Maxell, Ltd.), 07 July 2005 (07.07.2005), claims (Family: none) | 1-6 |

☒ Further documents are listed in the continuation of Box C.     ☐ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| 09 April, 2012 (09.04.12) | 17 April, 2012 (17.04.12) |

| Name and mailing address of the ISA/ <br> Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/050956 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2004-327669 A  (Dowa Mining Co., Ltd.), 18 November 2004 (18.11.2004), claims & US 2004/0212472 A1     & US 2007/0131893 A1 & EP 1475352 A2          & KR 2004/0093021 A & CN 1540687 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4344001 B
- JP 2010073705 A
- JP 2009084614 A
- JP 2007204817 A
- JP 2005179096 A
- JP 2004327669 A

**Non-patent literature cited in the description**

- Testing methods for paints, Part 2: Characteristics and stability of paints, Section 5: dispersity. *JISK-5600-2-5,* 1999